# EUROPEAN PATENT APPLICATION

(11) **EP 4 825 687 A1**
(43) Date of publication of application: **21.10.2026**
(21) Application number: 24829576.8
(22) Date of filing: 27.11.2024
(51) Int. Cl.: B60W 30/17

(54) **CONTROL DEVICE AND CONTROL METHOD**

(30) Priority: 12.12.2023 JP 2023209653
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/061904
(87) International publication number: WO 2025/125963

(57) **Abstract**

The invention obtains a controller and a control method capable of improving safety.

An execution section enables a control mode, in which positional relationship adjustment operation is executed to adjust a positional relationship between a lean vehicle and a preceding vehicle to a target positional relationship based on surrounding environment information of the lean vehicle, based on setting input information by a rider of the lean vehicle. When trigger information is acquired, the execution section shifts the control mode from a first phase, in which the lean vehicle is stopped, to a second phase, in which the lean vehicle is automatically started. While the control mode is enabled, the execution section acquires fall possibility information, which is information indicating a fall possibility of the lean vehicle in a second phase, and the fall possibility information is information indicating that the fall possibility of the lean vehicle exceeds a reference. In such a case, the execution section cancels or interrupts the control mode.

## Description

### Technical Field

The present invention relates to a controller and a control method capable of improving safety.

### Background Art

Conventionally, various techniques for assisting a rider with driving of a lean vehicle have been proposed. For example, the following rider-assistance system is disclosed in PTL 1. Based on information detected by a sensor that detects an obstacle present in a travel direction or substantially in the travel direction, the rider-assistance system warns the rider that the lean vehicle inappropriately approaches the obstacle.

### Citation List

### Patent Literature

PTL 1: JP-A-2009-116882

### Summary of Invention

### Technical Problem

By the way, the following control mode has been known as the technique for assisting with driving of the vehicle. In the control mode, positional relationship adjustment operation is executed to adjust a positional relationship between the vehicle and a preceding vehicle to a target positional relationship. There is a technique of shifting such a control mode from a first phase, in which the vehicle is stopped, to a second phase, in which the vehicle is automatically started, when a trigger signal is acquired. When such a technique is employed for the lean vehicle, it is required to give consideration to safety since body behavior of the lean vehicle is more likely to become unstable than other vehicles (for example, an automobile and the like).

The invention has been made with the above-described problem as the background and therefore obtains a controller and a control method capable of improving safety.

### Solution to Problem

A controller according to the invention is a controller that controls behavior of a lean vehicle, and includes an execution section that enables a control mode based on setting input information by a rider of the lean vehicle, in the control mode, positional relationship adjustment operation being executed to adjust a positional relationship between the lean vehicle and a preceding vehicle to a target positional relationship based on surrounding environment information of the lean vehicle, in which, when trigger information is acquired, the execution section shifts the control mode from a first phase in which the lean vehicle is stopped to a second phase in which the lean vehicle is automatically started, and while the control mode is enabled, the execution section acquires fall possibility information that is information indicating a fall possibility of the lean vehicle in the second phase, and cancels or interrupts the control mode when the fall possibility information is information indicating that a fall possibility of the lean vehicle exceeds a reference.

A control method according to the invention is a control method for behavior of a lean vehicle, and includes enabling a control mode by an execution section of a controller based on setting input information by a rider of the lean vehicle, in the control mode, positional relationship adjustment operation being executed to adjust a positional relationship between the lean vehicle and a preceding vehicle to a target positional relationship based on surrounding environment information of the lean vehicle, in which, when trigger information is acquired, the execution section shifts the control mode from a first phase in which the lean vehicle is stopped to a second phase in which the lean vehicle is automatically started, and while the control mode is enabled, the execution section acquires fall possibility information that is information indicating a fall possibility of the lean vehicle in the second phase, and cancels or interrupts the control mode when the fall possibility information is information indicating that a fall possibility of the lean vehicle exceeds a reference.

### Advantageous Effects of Invention

In the controller and the control method according to the invention, the execution section of the controller enables the control mode, in which the positional relationship adjustment operation is executed to adjust the positional relationship between the lean vehicle and the preceding vehicle to the target positional relationship based on the surrounding environment information of the lean vehicle, based on setting input information by the rider of the lean vehicle. In addition, when the trigger information is acquired, the execution section shifts the control mode from the first phase, in which the lean vehicle is stopped, to the second phase, in which the lean vehicle is automatically started. Furthermore, while the control mode is enabled, the execution section acquires the fall possibility information that is the information indicating the fall possibility of the lean vehicle in the second phase. When the fall possibility information is the information indicating that the fall possibility of the lean vehicle exceeds the reference, the execution section cancels or interrupts the control mode. In this way, by the cancellation or the interruption of the control mode, it is possible to reliably suppress an automatic start of the lean vehicle from a stopped state despite a fact that the lean vehicle possibly falls. Thus, safety can be improved.

### Brief Description of Drawings

Fig. 1 is a schematic view illustrating an outline configuration of a lean vehicle according to an embodiment of the invention.
Fig. 2 is a block diagram illustrating an example of a functional configuration of a controller according to the embodiment of the invention.
Fig. 3 is a chart illustrating an operation flow of the controller according to the embodiment of the invention. Description of Embodiments

A description will hereinafter be made on a controller and a control method according to the invention with reference to the drawings.

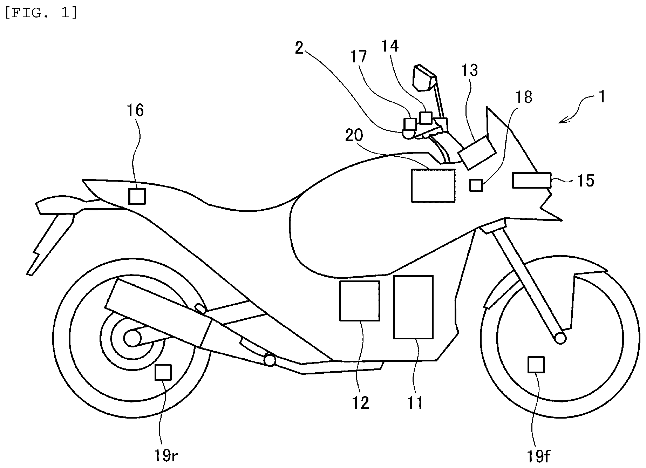

The following description will be made on the controller that is used for a two-wheeled motorcycle (see a lean vehicle 1 in Fig. 1). However, a vehicle as a control target of the controller according to the invention only needs to be a lean vehicle, and may be the lean vehicle other than the two-wheeled motorcycle. The lean vehicle means a vehicle, a body of which is tilted to the right when turning in a right direction and is tilted to the left when turning in a left direction. Examples of the lean vehicle are motorcycles (the two-wheeled motor vehicle and a three-wheeled motor vehicle) and a bicycle. The motorcycles include a vehicle having an engine as a power source, a vehicle having an electric motor as a power source, and the like. Examples of the motorcycles are a motorbike, a scooter, and an electric scooter. The bicycle means a vehicle capable of traveling forward on a road by a depression force applied to pedals by a rider. Examples of the bicycle are a normal bicycle, an electrically-assisted bicycle, and an electric bicycle.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Lean Vehicle>

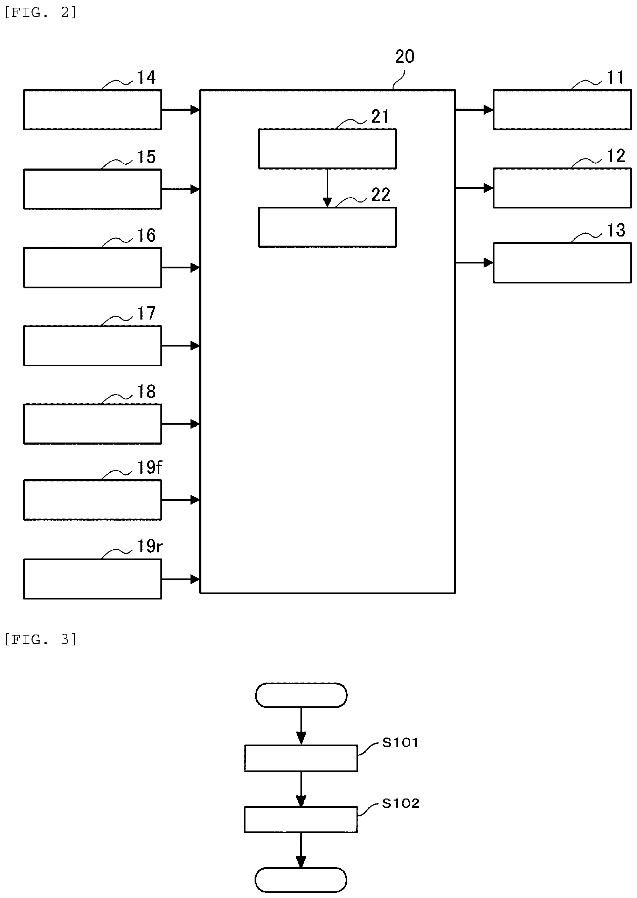

A description will be made on a configuration of the lean vehicle 1 according to an embodiment of the invention with reference to Figs. 1 and 2.

Fig. 1 is a schematic view illustrating an outline configuration of the lean vehicle 1. The lean vehicle 1 is a two-wheeled motorcycle that corresponds to an example of the lean vehicle according to the invention. As illustrated in Fig. 1, the lean vehicle 1 includes a handlebar 2, a drive system 11, a brake system 12, a notification device 13, a setting input device 14, a surrounding environment sensor 15, an inertial measurement unit (IMU) 16, a grip force sensor 17, a steering angle sensor 18, a front-wheel rotational frequency sensor 19f, a rear-wheel rotational frequency sensor 19r, and a controller (ECU) 20. The lean vehicle 1 is a vehicle that cannot stand by itself in a stopped state. That is, a standing state of the stopped lean vehicle 1 is maintained by supporting the lean vehicle 1 with the rider's feet on a road surface. However, the lean vehicle 1 may be a vehicle that can stand by itself in the stopped state.

The drive system 11 is a drive source of the lean vehicle 1, and can output power for driving a drive wheel (more specifically, a rear wheel). For example, the drive system 11 is an engine. As the drive system 11, a drive source (for example, an electric motor) other than the engine may be mounted, or plural drive sources may be mounted.

The brake system 12 has a function to control a braking force that is generated on the wheel of the lean vehicle 1. For example, the brake system 12 is a hydraulic pressure control unit, and includes components (for example, a control valve, a pump, and the like) that are provided on an oil channel connecting a master cylinder and a wheel cylinder in order to control a brake hydraulic pressure in the wheel cylinder. The braking force generated on the wheel is controlled when operation of the components of the brake system 12 is controlled. The brake system 12 may control the braking forces generated on both of a front wheel and the rear wheel, or may only control the braking force generated on one of the front wheel and the rear wheel. As the brake system 12, a control unit (so-called brake-by-wire) that controls a position of a braking section itself of the wheel by an electric signal may be employed.

The notification device 13 may notify the rider of information by display (that is, a sensation through a visual organ as a sensory organ), may notify the rider of the information by sound (that is, a sensation through an auditory organ as the sensory organ), or may notify the rider of the information by vibration (that is, a sensation through a tactile organ as the sensory organ). Examples of the notification device 13 is a display, a lamp, a speaker, and a vibrator. The notification device 13 may be provided to the lean vehicle 1 or may be provided to an accessory (for example, a helmet, a glove, or the like) that is associated with the lean vehicle 1. Alternatively, the notification device 13 may notify the rider of the information by generating instantaneous deceleration or acceleration to the lean vehicle 1. That is, the brake system 12 or the drive system 11 may constitute the notification device 13.

The setting input device 14 accepts input of various settings by the rider. For example, the setting input device 14 is provided to the handlebar 2 and includes a push button operated by the rider, and the like. Setting input information as information on the setting input by the rider on the setting input device 14 is output to the controller 20. The setting input device 14 may be provided to the lean vehicle 1 or may be provided to the accessory (for example, the helmet, the glove, or the like) that is associated with the lean vehicle 1. Alternatively, the setting input device 14 may accept an operation by the rider's body (for example, a hand, a foot, or the like) or may accept voice produced by the rider. Further alternatively, the setting input device 14 may be integrated with the notification device 13 or may be separated from the notification device 13.

The surrounding environment sensor 15 detects surrounding environment information of the lean vehicle 1. More specifically, the surrounding environment sensor 15 is provided to a front portion of the lean vehicle 1 and detects the surrounding environment information in front of the lean vehicle 1. The surrounding environment information that is detected by the surrounding environment sensor 15 is output to the controller 20. The surrounding environment information that is detected by the surrounding environment sensor 15 may be information on a distance to or an orientation of a target object that is located around the lean vehicle 1 (for example, a relative position, a relative distance, a relative speed, relative acceleration, or the like), or may be a characteristic of the target object that is located around the lean vehicle 1 (for example, a type of the target object, a shape of the target object itself, a mark on the target object, or the like). Examples of the surrounding environment sensor 15 are a radar, a Lidar sensor, an ultrasonic sensor, and a camera. The surrounding environment information can also be detected by a surrounding environment sensor mounted to another vehicle or by an infrastructure facility. In other words, the controller 20 can also acquire the surrounding environment information via wireless communication with the other vehicle or the infrastructure facility.

The IMU 16 detects three-axis acceleration (acceleration in a body front-rear direction, lateral acceleration, and acceleration in a body height direction) and three-axis angular velocities (an angular velocity in a roll direction, an angular velocity in a pitch direction, and an angular velocity in a yaw direction) that are generated to the lean vehicle 1. The IMU 16 may detect other physical quantities that can substantially be converted to the three-axis acceleration and the three-axis angular velocities generated to the lean vehicle 1. Alternatively, the IMU 16 may partially detect the three-axis acceleration and the three-axis angular velocities.

The grip force sensor 17 is provided to the handlebar 2 and detects a grip force that is a force of the rider to grip the handlebar 2. The grip force sensor 17 may detect another physical quantity that can substantially be converted to the grip force.

The steering angle sensor 18 detects a steering angle of the lean vehicle 1. For example, the steering angle sensor 18 detects a steering angle of the handlebar 2 as the steering angle of the lean vehicle 1. For example, the steering angle of the lean vehicle 1 is an angle defined by a front direction of the body of the lean vehicle 1 and a front direction of the handlebar 2. The steering angle sensor 18 may detect another physical quantity that can substantially be converted to the steering angle of the handlebar 2. For example, the steering angle sensor 18 may detect an angle defined by the front direction of the body of the lean vehicle 1 and a front direction of the front wheel.

The front-wheel rotational frequency sensor 19f is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 19f may detect another physical quantity that can substantially be converted to the rotational frequency of the front wheel. The front-wheel rotational frequency sensor 19f is provided to the front wheel.

The rear-wheel rotational frequency sensor 19r is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 19r may detect another physical quantity that can substantially be converted to the rotational frequency of the rear wheel. The rear-wheel rotational frequency sensor 19r is provided to the rear wheel.

The controller 20 controls behavior of the lean vehicle 1. For example, a part or whole of the controller 20 includes a microcomputer, a microprocessor unit, memory, or the like. Alternatively, the part or the whole of the controller 20 may be one whose firmware and the like can be updated, or may be a program module or the like that is executed by a command from a CPU or the like, for example. The controller 20 may be provided as one unit or may be divided into plural units, for example.

Fig. 2 is a block diagram illustrating an example of a functional configuration of the controller 20. As illustrated in Fig. 2, the controller 20 includes an acquisition section 21 and an execution section 22, for example. In addition, the controller 20 communicates with each of the devices in the lean vehicle 1.

The acquisition section 21 acquires various types of information based on output from the devices in the lean vehicle 1, and outputs the acquired information to the execution section 22. For example, the acquisition section 21 acquires the various types of the information based on output from the setting input device 14, the surrounding environment sensor 15, the IMU 16, the grip force sensor 17, the steering angle sensor 18, the front-wheel rotational frequency sensor 19f, and the rear-wheel rotational frequency sensor 19r. The acquisition section 21 acquires various types of information based on output of devices, which are not illustrated, when necessary.

The execution section 22 executes various control modes by controlling operation of each of the devices in the lean vehicle 1. The execution section 22 controls operation of the drive system 11, the brake system 12, and the notification device 13, for example.

By using the setting input device 14, the rider can set validity and invalidity of the control mode in which positional relationship adjustment operation can be executed to adjust a positional relationship between the lean vehicle 1 and a preceding vehicle to a target positional relationship based on the surrounding environment information of the lean vehicle 1. The execution section 22 switches between the validity and the invalidity of the control mode based on the setting input information output from the setting input device 14. The positional relationship adjustment operation is operation to automatically generate deceleration or acceleration to the lean vehicle 1 and adjust the positional relationship between the lean vehicle 1 and the preceding vehicle (in particular, an inter-vehicle distance, a relative distance in the body front-rear direction, or a passing time difference). While the control mode is enabled, the execution section 22 executes the positional relationship adjustment operation when the preceding vehicle is identified, and executes operation to control the speed of the lean vehicle 1 without executing the positional relationship adjustment operation when the preceding vehicle is not identified. The operation to control the speed of the lean vehicle 1 that is executed when the preceding vehicle is not identified may be cruise control operation to maintain the speed of the lean vehicle 1 at a set speed, may be automatic deceleration operation to decelerate the lean vehicle 1 at predetermined deceleration, may be automatic acceleration operation to accelerate the lean vehicle 1 at predetermined acceleration, or may be operation to stop the lean vehicle 1 at a predetermined position defined for a stop line located in front of the lean vehicle 1. While the control mode is enabled and a predetermined condition (for example, a condition that a vehicle speed exceeds a reference, or the like) is satisfied, the rider performs a predetermined operation of each of the devices (for example, the brake system 12, the drive system 11, and the like) other than the setting input device 14. In this way, the rider can disenable the control mode.

For example, the positional relationship adjustment operation that is executed when the preceding vehicle is identified is adaptive cruise control operation that sets the preceding vehicle as a speed following target. The positional relationship adjustment operation may be operation to generate the braking force to the lean vehicle 1 in a state where the rider is operating the operation section (for example, an accelerator grip or the like) of the drive system 11 in order to adjust the positional relationship between the lean vehicle 1 and the preceding vehicle to the target positional relationship that corresponds to an operation amount. Alternatively, the positional relationship adjustment operation may be operation to actuate the drive system 11 in a state where the rider is operating the operation section (for example, a brake lever, a brake pedal, or the like) of the brake system 12 in order to adjust the positional relationship between the lean vehicle 1 and the preceding vehicle to the target positional relationship that corresponds to an operation amount. Further alternatively, the positional relationship adjustment operation may be operation to adjust the positional relationship between the lean vehicle 1 and the preceding vehicle by automatically increasing or reducing the braking force generated on the wheel of the lean vehicle 1 in order to correct excess or deficiency of the rider's operation of the operation section of the brake system 12. Further alternatively, the positional relationship adjustment operation may be operation to adjust the positional relationship between the lean vehicle 1 and the preceding vehicle by automatically increasing or reducing drive power generated to the lean vehicle 1 in order to correct excess or deficiency of the rider's operation of the operation section of the drive system 11.

While the control mode, in which the positional relationship adjustment operation can be executed, is enabled, the execution section 22 automatically decelerates the lean vehicle 1 to reach a first phase in which the lean vehicle 1 is stopped. In the first phase, the execution section 22 controls the drive system 11 and/or the brake system 12 to maintain the stopped state of the lean vehicle 1. The execution section 22 may control a clutch device, a transmission, or the like, which are not illustrated, for example.

For example, while the control mode is enabled, the execution section 22 stops the lean vehicle 1 while adjusting the positional relationship between the lean vehicle 1 and the preceding vehicle by executing the positional relationship adjustment operation. Alternatively, while the control mode is enabled, when the preceding vehicle is stopped, the execution section 22 automatically decelerates the lean vehicle 1, and stops the lean vehicle 1 at the predetermined position that is defined for the preceding vehicle. Alternatively, while the control mode is enabled and the preceding vehicle is not identified, when the stop line is detected, the execution section 22 automatically decelerates the lean vehicle 1, and stops the lean vehicle 1 at the predetermined position that is defined for the stop line. Alternatively, while the control mode is enabled, after the execution section 22 reduces the vehicle speed of the lean vehicle 1 to a predetermined speed while adjusting the positional relationship between the lean vehicle 1 and the preceding vehicle by executing the positional relationship adjustment operation, the execution section 22 automatically decelerates the lean vehicle 1 at the predetermined deceleration, which is set in advance, not based on the surrounding environment information and stops the lean vehicle 1.

For example, while the control mode is enabled, after the execution section 22 reduces the vehicle speed of the lean vehicle 1 to a low speed while adjusting the positional relationship between the lean vehicle 1 and the preceding vehicle by executing the positional relationship adjustment operation, the rider performs a manual operation indicating his or her intention to stop (for example, an operation to push a push button of the setting input device 14, an operation to temporarily grip or depress the operation section of the brake system 12, or the like). In such a case, the execution section 22 stops the lean vehicle 1 while adjusting the positional relationship between the lean vehicle 1 and the preceding vehicle by executing the positional relationship adjustment operation. Alternatively, when the rider performs the manual operation indicating his or her intention to stop after the preceding vehicle is stopped while the control mode is enabled, the execution section 22 stops the lean vehicle 1 at the predetermined position that is defined for the preceding vehicle. Alternatively, when the rider performs the manual operation indicating his or her intention to stop after the stop line is detected while the control mode is enabled and the preceding vehicle is not identified, the execution section 22 stops the lean vehicle 1 at the predetermined position that is defined for the stop line. Alternatively, while the control mode is enabled, after the execution section 22 reduces the vehicle speed of the lean vehicle 1 to the predetermined speed while adjusting the positional relationship between the lean vehicle 1 and the preceding vehicle by executing the positional relationship adjustment operation, the rider performs the manual operation indicating his or her intention to stop. In such a case, the execution section 22 automatically decelerates the lean vehicle 1 at the predetermined deceleration, which is set in advance, not based on the surrounding environment information and stops the lean vehicle 1.

While the control mode, in which the positional relationship adjustment operation can be executed, is enabled, when trigger information is acquired, the execution section 22 shifts the phase from the first phase in which the lean vehicle 1 is stopped to a second phase in which the lean vehicle 1 is automatically started. For example, the trigger information is information indicating that the preceding vehicle has been started. The information may be acquired based on the surrounding environment information detected by the surrounding environment sensor 15, or may be acquired based on the surrounding environment information that is the information detected by the other vehicle or the infrastructure facility. Alternatively, the trigger information is information indicating that the rider has performed the manual operation indicating his or her intention to start. The manual operation may be the rider's operation of the operation section of the drive system 11. In such a case, the trigger information is acquired based on output of a sensor for detecting the operation state information of the operation section of the drive system 11 (for example, a sensor for detecting a rotation amount of the accelerator grip, a sensor for detecting a throttle opening amount, a sensor for detecting an engine speed, or the like). Alternatively, the manual operation may be the rider's operation to push the push button of the setting input device 14. In such a case, the trigger information is acquired based on the operation state information that is output from the setting input device 14. That is, the trigger information can be acquired based on at least one of the surrounding environment information of the lean vehicle 1 and the operation state information of the lean vehicle 1 by the rider.

For example, when the trigger information is acquired while the control mode is enabled, the execution section 22 automatically starts the lean vehicle 1 while adjusting the positional relationship between the lean vehicle 1 and the preceding vehicle by executing the positional relationship adjustment operation. Alternatively, when the trigger information is acquired while the control mode is enabled, the execution section 22 automatically starts the lean vehicle 1 at the predetermined acceleration, which is set in advance, not based on the surrounding environment information, increases the vehicle speed of the lean vehicle 1 to the predetermined speed, and thereafter starts the positional relationship adjustment operation.

Here, while the control mode, in which the positional relationship adjustment operation can be executed, is enabled, the execution section 22, in the second phase, acquires fall possibility information that is information indicating a fall possibility of the lean vehicle 1. Then, when the fall possibility information is information indicating that the fall possibility of the lean vehicle 1 exceeds a reference, the execution section 22 cancels or interrupts the control mode. Meanwhile, when the fall possibility information is information indicating that the fall possibility of the lean vehicle 1 falls below the reference, the execution section 22 continues the enabled control mode. The fall possibility information is acquired at a preliminary stage of the second phase. That is, the fall possibility information is information indicating that the lean vehicle 1 possibly falls when the stopped lean vehicle 1 is automatically started.

For example, the fall possibility information is acquired based on body posture information of the lean vehicle 1. The body posture information is information on a body posture of the lean vehicle 1 and can include tilted state information of the lean vehicle 1, for example.

More specifically, the acquisition section 21 may acquire the tilted state information based on roll angle information of the lean vehicle 1. The roll angle information is information on a roll angle of the lean vehicle 1. Examples of the roll angle information are information indicating a value of the roll angle, rough information that expresses a magnitude of the roll angle in several stages, information indicating a value of a change rate of the roll angle, rough information that expresses a magnitude of the change rate of the roll angle in several stages, and information that can substantially be converted to any of those pieces of the information. For example, the acquisition section 21 can acquire the roll angle information based on the detection result of the IMU 16. Here, the acquisition section 21 may acquire the roll angle information by subjecting an image of a road surface, which is acquired by a camera mounted to the lean vehicle 1, to image processing or the like, for example. When the roll angle and/or the change rate thereof is smaller than a reference, the execution section 22 determines that the fall possibility is lower than the reference. When the roll angle and/or the change rate thereof is larger than the reference, the execution section 22 determines that the fall possibility is higher than the reference. Alternatively, when a state where the roll angle is larger than the reference does not continue over a reference time, the execution section 22 determines that the fall possibility is lower than the reference. When the state where the roll angle is larger than the reference continues over the reference time, the execution section 22 determines that the fall possibility is higher than the reference.

More specifically, the acquisition section 21 may acquire the tilted state information based on lateral acceleration information of the lean vehicle 1. The lateral acceleration information is information on the lateral acceleration of the lean vehicle 1. Examples of the lateral acceleration information are information indicating a value of the lateral acceleration, rough information that expresses a magnitude of the lateral acceleration in several stages, or information that can substantially be converted to any of those pieces of the information. For example, the acquisition section 21 can acquire the lateral acceleration information based on the detection result of the IMU 16. Here, the acquisition section 21 may acquire the lateral acceleration information by subjecting the image of the road surface, which is acquired by the camera mounted to the lean vehicle 1, to the image processing or the like, for example. When the lateral acceleration is lower than a reference, the execution section 22 determines that the fall possibility is lower than the reference. When the lateral acceleration is higher than the reference, the execution section 22 determines that the fall possibility is higher than the reference.

More specifically, the acquisition section 21 may acquire the tilted state information based on steering angle information of the lean vehicle 1. The steering angle information is information on the steering angle of the lean vehicle 1. Examples of the steering angle information are information indicating a value of the steering angle, rough information that expresses a magnitude of the steering angle in several stages, information indicating a value of a change rate of the steering angle, rough information that expresses a magnitude of the change rate of the steering angle in several stages, and information that can substantially be converted to any of those pieces of the information. For example, the acquisition section 21 can acquire the steering angle information based on the detection result of the steering angle sensor 18. When the steering angle and/or the change rate thereof is smaller than a reference, the execution section 22 determines that the fall possibility is lower than the reference. When the steering angle and/or the change rate thereof is larger than the reference, the execution section 22 determines that the fall possibility is higher than the reference. Alternatively, when a state where the steering angle is larger than the reference does not continue over a reference time, the execution section 22 determines that the fall possibility is lower than the reference. When the state where the steering angle is larger than the reference continues over the reference time, the execution section 22 determines that the fall possibility is higher than the reference.

For example, the fall possibility information is acquired based on the body posture information of the lean vehicle 1. The body posture information is the information on the body posture of the lean vehicle 1 and can include the steering angle information of the lean vehicle 1, for example. That is, the above description has been made on the example in which the steering angle information is used to acquire the tilted state information. However, there is a case where, when the lean vehicle 1 is stopped, the lean vehicle 1 is not tilted in the roll direction but the steering angle is increased to some extent. Accordingly, instead of using the steering angle information to acquire the tilted state information, the acquisition section 21 may acquire the steering angle information as the body posture information.

For example, the fall possibility information is acquired based on the body posture information of the lean vehicle 1. The body posture information is information on the body posture of the lean vehicle 1 and can include kickstand state information of the lean vehicle 1, for example. The kickstand state information is information on a kickstand of the lean vehicle 1, and examples of the kickstand state information is information on whether the kickstand is pulled down, information on a turning angle of the kickstand, rough information that expresses a magnitude of the turning angle of the kickstand in several stages, and information that can substantially be converted to any of those pieces of the information. For example, the acquisition section 21 can acquire the kickstand information based on a detection result of a sensor (not illustrated) that detects a state of the kickstand. The execution section 22 determines that the fall possibility is lower than the reference when the kickstand is stored, and determines that the fall possibility is higher than the reference when the kickstand is pulled down. Alternatively, the execution section 22 determines that the fall possibility is lower than the reference when the turning angle of the kickstand is lower than a reference, and determines that the fall possibility is higher than the reference when the turning angle of the kickstand is higher than the reference.

More specifically, in a state where the lean vehicle 1 is not tilted in the roll direction, the acquisition section 21 acquires, as the body posture information, the steering angle information of the lean vehicle 1. For example, the acquisition section 21 can acquire the steering angle information based on the detection result of the steering angle sensor 18. The execution section 22 determines that the fall possibility is lower than the reference when the steering angle and/or the change rate thereof is smaller than the reference, and determines that the fall possibility is higher than the reference when the steering angle and/or the change rate thereof is higher than the reference. Alternatively, when the state where the steering angle is larger than the reference does not continue over the reference time, the execution section 22 determines that the fall possibility is lower than the reference. When the state where the steering angle is larger than the reference continues over the reference time, the execution section 22 determines that the fall possibility is higher than the reference.

For example, the fall possibility information is acquired based on riding state information of the rider of the lean vehicle 1. The riding state information is information on a riding state of the rider of the lean vehicle 1, and can include grip state information of the handlebar 2 of the lean vehicle 1 by the rider of the lean vehicle 1, for example.

More specifically, the grip state information is information on a grip state of the handlebar 2 of the lean vehicle 1 by the rider. Examples of the grip state information are information indicating a value of the grip force of the handlebar 2 by the rider, rough information that expresses a magnitude of the grip force in several stages, information indicating whether the handlebar 2 is gripped by the rider, and information that can substantially be converted to any of those pieces of the information. For example, the acquisition section 21 can acquire the grip state information based on the detection result of the grip force sensor 17. For example, the execution section 22 determines that the fall possibility is higher than the reference when the handlebar 2 is not gripped by the rider. Alternatively, the execution section 22 determines that the fall possibility is lower than the reference when the grip force of the handlebar 2 by the rider is larger than a reference, and determines that the fall possibility is higher than the reference when the grip force of the handlebar 2 by the rider is smaller than the reference.

For example, the fall possibility information is acquired based on the riding state information of the rider of the lean vehicle 1. The riding state information is the information on the riding state of the rider of the lean vehicle 1, and can include posture information of the rider of the lean vehicle 1, for example.

More specifically, the posture information is information on a posture of the rider, and is information indicating an orientation of the rider's head, for example. The acquisition section 21 can acquire the posture information by using various sensors. For example, the acquisition section 21 may acquire the posture information based on a detection result of a camera that is mounted to the lean vehicle 1 and captures an image of each part of the rider. Alternatively, for example, the acquisition section 21 may acquire posture information on a posture of the rider's head (for example, the information indicating the orientation of the rider's head) based on a detection result of an IMU that is mounted to the rider's helmet. Further alternatively, for example, the acquisition section 21 may acquire the posture information based on a detection result of a sensor (for example, a seating sensor or the like) that is mounted to the lean vehicle 1 and can detect contact with each of the parts of the rider. For example, the execution section 22 determines that the fall possibility is lower than the reference when an angle defined by the front direction of the body of the lean vehicle 1 and the orientation of the rider's head is smaller than a reference, and determines that the fall possibility is higher than the reference when the angle defined by the front direction of the body of the lean vehicle 1 and the orientation of the rider's head is larger than the reference.

The description has been made so far on the various examples of the fall possibility information. The fall possibility information may be information other than those pieces of the information described above. In addition, plural types of information may be used in combination as the fall possibility information. For example, as the fall possibility information, plural types of the information appropriately selected from the above-described examples may be used together.

Preferably, at the time point at which the control mode, in which the positional relationship adjustment operation can be executed, is enabled and the control mode is in the first phase, that is, at the time point prior to the acquisition of the trigger information, when the fall possibility information acquired at the time point or prior to the time point, that is, the fall possibility information as the information indicating the fall possibility of the lean vehicle 1 in the second phase is the information indicating that the fall possibility of the lean vehicle 1 exceeds the reference, the execution section 22 cancels or interrupts the control mode. Meanwhile, when the fall possibility information is the information indicating that the fall possibility of the lean vehicle 1 falls below the reference, the execution section 22 continues the enabled control mode.

Alternatively, at the time point at which the control mode, in which the positional relationship adjustment operation can be executed, is enabled and the trigger information is acquired, when the fall possibility information acquired at the time point or prior to the time point, that is, the fall possibility information as the information indicating the fall possibility of the lean vehicle 1 in the second phase is the information indicating that the fall possibility of the lean vehicle 1 exceeds the reference, the execution section 22 cancels or interrupts the control mode. Meanwhile, when the fall possibility information is the information indicating that the fall possibility of the lean vehicle 1 falls below the reference, the execution section 22 continues the enabled control mode.

In addition, preferably, when the fall possibility information, that is, the fall possibility information as the information indicating the fall possibility of the lean vehicle 1 in the second phase is the information indicating that the fall possibility of the lean vehicle 1 exceeds the reference, the execution section 22 interrupts the control mode in which the positional relationship adjustment operation can be executed. In such a case, the execution section 22 may determine restart timing of the interrupted control mode based on the output of the sensor (for example, the sensor for detecting the rotation amount of the accelerator grip, the sensor for detecting the throttle opening amount, the sensor for detecting engine torque, or the like) for detecting the operation state information of the operation section of the drive system 11 in the lean vehicle 1 by the rider. For example, when the rider's operation of the operation section of the drive system 11 in the lean vehicle 1 is canceled, the execution section 22 restarts the interrupted control mode. Alternatively, when an operation amount of the operation section of the drive system 11 in the lean vehicle 1 by the rider becomes smaller than a reference, the execution section 22 restarts the interrupted control mode. The reference for the interruption and the reference for the restart may be the same or different. Alternatively, when the operation section of the drive system 11 of the lean vehicle 1 is an accelerator grip that is rotated in a first direction from an initial position, at which the output of the drive system 11 is the lowest, to increase the output of the drive system 11, and that can be also rotated in a second direction from the initial position, the execution section 22 restarts the interrupted control mode when the rider performs a rotational operation of the accelerator grip in the second direction from the initial position. When the execution section 22 restarts the control mode, the control mode may take over the setting state immediately before the interruption. In particular, the trigger information for shifting the control mode from the first phase to the second phase may be acquired based on the output of the sensor for detecting the operation state information of the operation section of the drive system 11. That is, while the control mode, in which the positional relationship adjustment operation can be executed, is enabled and the lean vehicle 1 is stopped, when the rider operates the operation section of the drive system 11 or increases the operation amount of the operation section of the drive system 11 to be larger than the reference, shifting from the first phase to the second phase is permitted. However, in such a case, when the fall possibility information, which is the information indicating the fall possibility of the lean vehicle 1 in the second phase, is the information indicating that the fall possibility of the lean vehicle 1 exceeds the reference, the control mode is interrupted, and the lean vehicle 1 is started by the rider's manual operation. Then, when the rider operates the operation section of the drive system 11 into a predetermined state, the control mode is restarted, and the permission for shifting from the first phase to the second phase, which has been issued prior to the interruption, is taken over, and the execution section 22 thereby automatically continues the start of the lean vehicle 1.

Preferably, when the fall possibility information, that is, the fall possibility information, which is the information indicating the fall possibility of the lean vehicle 1 in the second phase, is the information indicating that the fall possibility of the lean vehicle 1 exceeds the reference, the execution section 22 causes the notification device 13 to output information that notifies the rider of the cancellation or the interruption of the control mode. That is, when the fall possibility information is the information indicating that the fall possibility of the lean vehicle 1 exceeds the reference, the execution section 22 outputs the control command to the notification device 13 at the same time as the automatic cancellation or interruption of the control mode, before the automatic cancellation or interruption of the control mode, or after the automatic cancellation or interruption of the control mode. The reference for the cancellation or the interruption of the control mode and the reference for the notification may be the same or different.

Alternatively, when the fall possibility information, that is, the fall possibility information, which is the information indicating the fall possibility of the lean vehicle 1 in the second phase, is the information indicating that the fall possibility of the lean vehicle 1 exceeds the reference, the execution section 22 may cause the notification device 13 to output information that urges the rider to cancel or interrupt the control mode. That is, when the fall possibility information is the information indicating that the fall possibility of the lean vehicle 1 exceeds the reference, the execution section 22 outputs the control command to the notification device 13 to urge the rider to perform the operation to cancel or interrupt the control mode. Then, when the performance of such an operation is detected based on the output of the setting input device 14, that is, the setting input information, the execution section 22 cancels or interrupts the control mode.

### <Operation of Controller>

A description will be made on operation of the controller 20 according to the embodiment of the invention with reference to Fig. 3. Fig. 3 is a chart illustrating an operation flow of the controller 20.

The controller 20 executes the operation flow illustrated in Fig. 3 during the travel of the lean vehicle 1.

### (Acquisition Step)

In step S101, the acquisition section 21 acquires the various types of the information based on output of the devices of the lean vehicle 1, and outputs the acquired information to the execution section 22.

### (Execution Step)

In step S102, the execution section 22 executes the various control modes by controlling the operation of each of the devices in the lean vehicle 1. The execution section 22 enables the control mode, in which the positional relationship adjustment operation is executed to adjust the positional relationship between the lean vehicle 1 and the preceding vehicle to the target positional relationship based on the surrounding environment information of the lean vehicle 1, based on the setting input information by the rider of the lean vehicle 1. When the trigger information is acquired, the execution section 22 shifts the control mode from the first phase, in which the lean vehicle 1 is stopped, to the second phase, in which the lean vehicle 1 is automatically started. While the control mode is enabled, the execution section 22 acquires the fall possibility information, which is the information indicating the fall possibility of the lean vehicle 1 in the second phase, and the fall possibility information is the information indicating that the fall possibility of the lean vehicle 1 exceeds the reference. In such a case, the execution section 22 cancels or interrupts the control mode.

### <Effects of Controller>

A description will be made on effects of the controller 20 according to the embodiment of the invention.

The execution section 22 of the controller 20 enables the control mode, in which the positional relationship adjustment operation is executed to adjust the positional relationship between the lean vehicle 1 and the preceding vehicle to the target positional relationship based on the surrounding environment information of the lean vehicle 1, based on the setting input information by the rider of the lean vehicle 1. In addition, when the trigger information is acquired, the execution section 22 shifts the control mode from the first phase, in which the lean vehicle 1 is stopped, to the second phase, in which the lean vehicle 1 is automatically started. Furthermore, while the control mode is enabled, the execution section 22 acquires the fall possibility information, which is the information indicating the fall possibility of the lean vehicle 1 in the second phase, and the fall possibility information is the information indicating that the fall possibility of the lean vehicle 1 exceeds the reference. In such a case, the execution section 22 cancels or interrupts the control mode. In this way, by the cancellation or the interruption of the control mode, it is possible to reliably suppress the automatic start of the lean vehicle 1 from the stopped state despite a fact that the lean vehicle 1 possibly falls. Thus, safety can be improved.

The description has been made so far on the embodiment. However, only a part of the embodiment may be implemented, parts of the embodiment may be combined, or a part of the embodiment may be modified to another aspect. In other words, the invention is not limited to the embodiment that has been described.

For example, in the described embodiment, the fall possibility information, which is the information indicating the fall possibility of the lean vehicle 1 in the second phase, is acquired in the preliminary stage of the second phase. However, the fall possibility information may be acquired in the second phase. That is, the fall possibility information may be information indicating a possibility that the automatically started lean vehicle 1 falls.

For example, in the described embodiment, the control mode is canceled or interrupted at the time point before the acquisition of the trigger information or at the time point of the acquisition of the trigger information. However, the control mode may be canceled or interrupted at the time point after the acquisition of the trigger information. In such a case, the fall possibility information, which is the information indicating the fall possibility of the lean vehicle 1 in the second phase, may be acquired in the preliminary stage of the second phase, or may be acquired in the second phase.

### Reference Signs List

- 1:: Lean vehicle
- 2:: Handlebar
- 11:: Drive system
- 12:: Brake system
- 13:: Notification device
- 14:: Setting input device
- 15:: Surrounding environment sensor
- 16:: Inertial measurement unit
- 17:: Grip force sensor
- 18:: Steering angle sensor
- 19f:: Front-wheel rotational frequency sensor
- 19r:: Rear-wheel rotational frequency sensor
- 20:: Controller
- 21:: Acquisition section
- 22:: Execution section

## Claims

1. A controller (20) that controls behavior of a lean vehicle (1), the controller comprising:
an execution section (22) that enables a control mode based on setting input information by a rider of the lean vehicle (1), in the control mode, positional relationship adjustment operation being executed to adjust a positional relationship between the lean vehicle (1) and a preceding vehicle to a target positional relationship based on surrounding environment information of the lean vehicle (1), wherein
when trigger information is acquired, the execution section (22) shifts the control mode from a first phase in which the lean vehicle (1) is stopped to a second phase in which the lean vehicle (1) is automatically started, and
while the control mode is enabled, the execution section (22) acquires fall possibility information that is information indicating a fall possibility of the lean vehicle (1) in the second phase, and cancels or interrupts the control mode when the fall possibility information is information indicating that a fall possibility of the lean vehicle (1) exceeds a reference.

2. The controller according to claim 1, wherein
when the fall possibility information is the information indicating that the fall possibility of the lean vehicle (1) exceeds the reference, the execution section (22) causes a notification device to output information that notifies or urges the rider to cancel or interrupt the control mode.

3. The controller according to claim 1, wherein
when the fall possibility information is the information indicating that the fall possibility of the lean vehicle (1) exceeds the reference, the execution section (22) interrupts the control mode, and determines restart timing of the interrupted control mode based on operation state information of an operation section of a drive system (11) in the lean vehicle (1) by the rider.

4. The controller according to claim 3, wherein
the trigger information is acquired based on the operation state information.

5. The controller according to claim 1, wherein
the trigger information is acquired based on at least one of the surrounding environment information and operation state information of the lean vehicle (1) by the rider.

6. The controller according to any one of claims 1 to 5, wherein
the fall possibility information is acquired based on body posture information of the lean vehicle (1).

7. The controller according to claim 6, wherein
the body posture information includes tilted state information of the lean vehicle (1).

8. The controller according to claim 7, wherein
the tilted state information is acquired based on roll angle information of the lean vehicle (1).

9. The controller according to claim 7, wherein
the tilted state information is acquired based on lateral acceleration information of the lean vehicle (1).

10. The controller according to claim 7, wherein
the tilted state information is acquired based on steering angle information of the lean vehicle (1).

11. The controller according to claim 6, wherein
the body posture information includes steering angle information of the lean vehicle (1).

12. The controller according to any one of claims 1 to 5, wherein
the fall possibility information is acquired based on riding state information of the rider.

13. The controller according to claim 12, wherein
the riding state information includes grip state information of a handlebar (2) of the lean vehicle (1) by the rider.

14. The controller according to claim 12, wherein
the riding state information includes posture information of the rider.

15. A control method for behavior of a lean vehicle (1), the control method comprising:
enabling a control mode by an execution section (22) of a controller (20) based on setting input information by a rider of the lean vehicle (1), in the control mode, positional relationship adjustment operation being executed to adjust a positional relationship between the lean vehicle (1) and a preceding vehicle to a target positional relationship based on surrounding environment information of the lean vehicle (1), wherein
when trigger information is acquired, the execution section (22) shifts the control mode from a first phase in which the lean vehicle (1) is stopped to a second phase in which the lean vehicle (1) is automatically started, and
while the control mode is enabled, acquiring fall possibility information by the execution section (22) and, when the fall possibility information is information indicating that a possibility of fall occurring to the lean vehicle (1) exceeds a reference, canceling or interrupting the control mode by the execution section (22), the fall possibility information being information on the possibility of fall occurring to the lean vehicle (1) in the second phase.
